# EUROPÄISCHE PATENTSCHRIFT

(11) **EP 3 482 881 B1**
(45) Veröffentlichungstag und Bekanntmachung des Hinweises auf die Patenterteilung: **22.03.2023**
(21) Anmeldenummer: 18205200.1
(22) Anmeldetag: 08.11.2018
(51) Int. Cl.: B25F 5/00

(54) **ELEKTROWERKZEUGMASCHINE, VERFAHREN ZUM BETRIEB EINER ELEKTROWERKZEUGMASCHINE, UND COMPUTERPROGRAMMPRODUKT**
ELECTRIC MACHINE TOOL, METHOD FOR OPERATING SAME, AND COMPUTER PROGRAM
MACHINE-OUTIL ÉLECTRIQUE, PROCÉDÉ DE FONCTIONNEMENT D'UNE MACHINE-OUTIL ÉLECTRIQUE, ET PROGRAMME D'ORDINATEUR

(30) Priorität: 09.11.2017 DE 102017126186
(43) Veröffentlichungstag der Anmeldung: 15.05.2019
(73) Patentinhaber: Metabowerke GmbH, 72622 Nürtingen (DE)
(72) Erfinder: Matheis, Frank, 73262 Reichenbach (DE)
(74) Vertreter: Markfort, Iris-Anne Lucie

(56) Entgegenhaltungen:
- EP-A1- 2 923 654
- EP-A1- 3 299 127
- US-A1- 2012 079 799
- "Electric motor-operated hand-held tools, transportable tools and lawn and garden machinery - Safety - Part 1: General requirements", IEC 62841-1:2014, IEC, 3, RUE DE VAREMBÉ, PO BOX 131, CH-1211 GENEVA 20, SWITZERLAND, 19 March 2014 (2014-03-19), pages 1-345, XP082002478, [retrieved on 2014-03-19]
- HEINZELMANN G ET AL: "Energy efficient drive train for a high-performance battery chain saw", ELECTRIC DRIVES PRODUCTION CONFERENCE (EDPC), 2011 1ST INTERNATIONAL, IEEE, 28 September 2011 (2011-09-28), pages 101-106, XP032000409, DOI: 10.1109/EDPC.2011.6085558 ISBN: 978-1-4577-1371-2

## Beschreibung

Die Erfindung betrifft eine Elektrowerkzeugmaschine, umfassend einen Elektromotor, nach dem Oberbegriff von Anspruch 1.

Die Erfindung betrifft auch ein Verfahren zum Betrieb einer Elektrowerkzeugmaschine mit einem Elektromotor gemäß dem Oberbegriff von Anspruch 8.

Die Erfindung betrifft außerdem ein Computerprogrammprodukt. Elektrowerkzeugmaschinen sind im Stand der Technik zur Bearbeitung und Fertigung von Werkstücken hinlänglich bekannt. Gattungsgemäße Elektrowerkzeugmaschinen können beispielsweise aus der DE 10 2014 105 107 A1, die im Wesentlichen eine Handwerkzeugmaschine, beispielsweise einen Winkel- oder Geradschleifer betrifft, oder der DE 10 2015 103 650 A1, die im Wesentlichen eine Handwerkzeugmaschine zum Bohren oder Schrauben betrifft, entnommen werden.

Die bekannten Elektrowerkzeugmaschinen umfassen einen Elektromotor zur Ausführung von zumeist rotierenden, teilweise aber auch translatorischen Bewegungen, sowie eine Eingabeschnittstelle, üblicherweise in der Art eines Betriebsschalters, mit dem der Elektromotor über eine Motorsteuereinheit betrieben werden kann. Erfahrungsgemäß werden Elektrowerkzeugmaschinen, insbesondere bei der Verwendung auf Baustellen, hohen mechanischen Belastungen ausgesetzt und mitunter nur unachtsam bedient. Dabei kann es selbst bei robusten Elektrowerkzeugmaschinen zu mechanischen und/oder elektronischen Schäden an den Elektrowerkzeugmaschinen kommen, wodurch in Folge ein ordnungsgemäßer Betrieb nicht mehr sichergestellt sein kann. Neben einem einfachen Ausfall der Elektrowerkzeugmaschine, der für den Betreiber zwar lästig, aber in der Regel nicht gefährlich ist, muss sichergestellt sein, dass ein teilweiser Ausfall der Mechanik und/oder Elektronik nicht zu gefährlichen Betriebszuständen, wie beispielsweise zu einem unkontrollierbaren Betrieb des Elektromotors, führt.

Entsprechende Schutzmaßnahmen sind in Normen geregelt. So schreibt beispielsweise die in der EN ISO 13849/1 beschriebene "Performance Level C-Richtlinie" ein zweikanaliges System zur Überwachung der Elektronik bei Elektrowerkzeugmaschinen vor. Insbesondere ist sicherzustellen, dass bei einem Loslassen des Betriebsschalters die Elektrowerkzeugmaschine bzw. der Elektromotor der Elektrowerkzeugmaschine auch tatsächlich ausläuft.

Zum Erreichen der Performance Level C-Richtlinie ist es bekannt, Schaltungen mit einem als Betriebsschalter verwendbaren Leistungsschalter oder mit einem separaten elektronischen Leistungsschalter auszustatten. Diese öffnen den Stromkreis zum Elektromotor bei einem Loslassen des Betriebsschalters verlässlich, wonach der Elektromotor sicher auslaufen kann.

Die Verwendung von Leistungsschaltern birgt jedoch eine Reihe von Nachteilen. Neben den hohen wirtschaftlichen Kosten der Leistungsschalter ergeben sich im Betrieb der Elektrowerkzeugmaschine hohe elektrische Verluste, was unter anderem die maximale Betriebsdauer einer akkubetriebenen Elektrowerkzeugmaschine herabsetzt und zu unerwünschter Abwärme führt.

Aus dem Stand der Technik ist ferner gemäß DE 10 2009 059 884 A1 ein Verfahren zum Betreiben eines netzbetriebenen Elektromotors für ein Elektrowerkzeug unter Verwendung von Schaltern, insbesondere Halbleiterschaltern, bekannt, wobei der Betrieb der Schalter mit Hilfe einer elektronischen Steuerung überwacht wird.

Die DE 10 2013 220 727 A1 beschreibt schließlich ein Steuergerät mit einer Sicherheitseinheit, die dazu ausgebildet ist, Sicherheitssteuersignale zu erzeugen. Eine Treibereinheit des Steuergeräts ist dazu ausgebildet, unabhängig von einem Zustand von Motorsteuersignalen bei einem ersten Zustandsmuster der Sicherheitssteuersignale Leistungshalbleitersteuersignale derart zu erzeugen, dass Leistungshalbleiter einen nicht-leitenden Zustand aufweisen, bei einem zweiten Zustandsmuster der Sicherheitssteuersignale die Leistungshalbleitersteuersignale derart zu erzeugen, dass ein Brückenausgangsanschluss mit einem positiven Zwischenkreispotential elektrisch verbunden ist, und bei einem dritten Zustandsmuster der Sicherheitssteuersignale die Leistungshalbleitersteuersignale derart zu erzeugen, dass der Brückenausgangsanschluss mit einem negativen Zwischenkreispotential elektrisch verbunden ist.

Ferner sei auf die EP 3 299 127 A1 verwiesen, die ebenfalls Elektrowerkzeugmaschinen, insbesondere von Akkupacks betriebene, kabellose Elektrowerkzeugmaschinen, betrifft. Diese Dokument fällt unter Artikel 54(3) EPÜ.

Außerdem betrifft die EP 2 923 654 A1 eine Sicherheitsschaltung für ein motorgetriebenes chirurgisches Instrument. Diese Dokument offenbart die Präambel des Hauptanspruches.

Der vorliegenden Erfindung liegt die Aufgabe zugrunde, eine verbesserte Elektrowerkzeugmaschine und ein verbessertes Verfahren zum Betrieb einer Elektrowerkzeugmaschine bereitzustellen, insbesondere um einen hohen Sicherheitsstandard für den Betrieb der Elektrowerkzeugmaschine zu gewährleisten, wobei bekannte Nachteile des Standes der Technik zumindest verringert werden.

Die Aufgabe wird durch eine Elektrowerkzeugmaschine nach Anspruch 1 und ein Verfahren nach Anspruch 8 gelöst.

Schließlich liegt der Erfindung auch die Aufgabe zugrunde, ein Computerprogrammprodukt mit Programmcodemitteln bereitzustellen, um ein hinsichtlich des Standes der Technik verbessertes Verfahren zum Betrieb einer Elektrowerkzeugmaschine bereitzustellen.

Diese Aufgabe wird durch ein Computerprogrammprodukt nach Anspruch 12 gelöst.

Die abhängigen Ansprüche betreffen vorteilhafte Ausführungsformen und Varianten der Erfindung.

Es ist eine Elektrowerkzeugmaschine vorgesehen, die einen Elektromotor, eine Motorsteuereinheit zum Betrieb des Elektromotors, eine Eingabeschnittstelle zur Eingabe einer Zielvorgabe eines Betriebszustands des Elektromotors in die Motorsteuereinheit und eine Motorsensoreinrichtung zur Erfassung des Betriebszustands des Elektromotors umfasst.

Als Elektrowerkzeugmaschine werden nachfolgend sowohl handgeführte Elektrowerkzeugmaschinen, wie Bohrmaschinen, Winkelschleifer oder dergleichen, als auch im Betrieb feststehende, d. h. stationäre oder halbstationäre Geräte, wie Tischkreissägen oder dergleichen, verstanden.

Die Erfindung eignet sich zur Verwendung einer Elektrowerkzeugmaschine mit einem Elektromotor beliebiger Bauweise, beispielsweise einem Drehstrommotor, einem Wechselstrommotor, einem Gleichstrommotor, einem Universalmotor, einem Linearmotor, usw. Besonders eignet sich die Erfindung allerdings zur Verwendung mit einem bürstenlosen Gleichstrommotor.

Erfindungsgemäß weist die Elektrowerkzeugmaschine eine von der Motorsteuereinheit unabhängige Nebensteuereinheit auf, die mit der Motorsensoreinrichtung und mit der Eingabeschnittstelle kommunikationsverbunden und dazu eingerichtet ist, den von der Motorsensoreinrichtung erfassten Betriebszustand des Elektromotors mit der über die Eingabeschnittstelle eingegebenen Zielvorgabe zu vergleichen und bei einer definierten Abweichung des Betriebszustands von der Zielvorgabe mittels einer Kontrolleinrichtung den Elektromotor abzuschalten Wenn mittels der Eingabeschnittstelle somit die Zielvorgabe für einen Betriebszustand in die Motorsteuereinheit eingegeben wird, kann diese Information bzw. Zielvorgabe ebenfalls der unabhängigen Steuereinheit zur Verfügung stehen.

Es kann vorgesehen sein, dass die von der Nebensteuereinheit zur Überwachung des Elektromotors verwendete Motorsensoreinrichtung gleichzeitig von der Motorsteuereinheit zum Betrieb des Elektromotors verwendet wird (z. B. als Messglied innerhalb eines Regelkreises). Eine bestehende Elektrowerkzeugmaschine kann somit leicht durch Hinzufügen einer unabhängigen Nebensteuereinheit erweitert werden, ohne dass die bestehende Elektronik wesentlich verändert, z. B. weitere Sensorik hinzugefügt werden muss.

Durch die von der Motorsteuereinheit unabhängige Nebensteuereinheit kann in vorteilhafter Weise ein zweikanaliges System bereitgestellt werden, ohne dass ein Leistungsschalter zwingend erforderlich ist. Bei einem Fehler in der Ansteuerung des Elektromotors, z. B. bei einem Fehler in der Motorsteuereinheit, aufgrund dessen eine Zielvorgabe (insbesondere ein Abschaltwunsch) über die Eingabeschnittstelle nicht erkannt wird, kann durch die separate Nebensteuereinheit eine redundante Überwachung der Eingabeschnittstelle und des Elektromotors gewährleistet sein. Im Falle eines Fehlers bzw. bei einer erkannten definierten Abweichung des Betriebszustands von der Zielvorgabe kann der Elektromotor mittels der Kontrolleinrichtung beeinflusst werden; ggf. kann die gesamte Elektrowerkzeugmaschine sicher abgeschaltet werden.

Die Kontrolleinrichtung kann als unabhängige Steuer- und/oder Regeleinrichtung ausgebildet sein, um den Betriebszustand des Elektromotors zu beeinflussen. Es kann aber auch eine bestehende Steuer- und/oder Regeleinrichtung als erfindungsgemäße Kontrolleinrichtung verwendbar sein.

Insbesondere kann durch die Kontrolleinrichtung ein redundanter Kontroll- und/oder Abschaltpfad gewährleistet sein.

Die Erfindung eignet sich grundsätzlich zur Sicherstellung der Einhaltung beliebiger Zielvorgaben bei dem Betrieb des Elektromotors und ist nicht auf die Verwendung als redundanter Abschaltpfad beschränkt. Beispielsweise kann durch den Vergleich der eingegebenen Zielvorgabe mit dem erfassten Betriebszustand des Elektromotors auch ein sicheres Einschalten und/oder die sichere Einhaltung einer beliebigen Drehzahlvorgabe überwacht werden. Bei einer erkannten Abweichung von der Vorgabe kann die Nebensteuereinheit den Elektromotor mittels der Kontrolleinrichtung dann gezielt beeinflussen (z. B. einschalten oder auf die vorgegebene Drehzahl einstellen) oder im Zweifelsfalle auch sicher abschalten oder in einen (verlangsamten) Notbetrieb versetzen.

Dadurch, dass die Verwendung eines Leistungsschalters, beispielsweise eines separaten elektronischen Halbleiterleistungsschalters (z. B. MOSFET oder Bipolartransistor) nicht unbedingt notwendig ist, kann die Elektrowerkzeugmaschine erfindungsgemäß verlustarm betrieben werden. Ferner kann die Nebensteuereinheit kostengünstiger realisierbar sein als ein Leistungsschalter. Schließlich ist auch die Möglichkeit einer kontrollierten Bremsung und/oder eines kontrollierten Anlaufvorgangs oder einer sonstigen Drehzahl-Zeit-Kurve im Normalbetrieb durch die Motorsteuereinheit technisch einfacher möglich.

Da bei der erfindungsgemäßen Elektrowerkzeugmaschine ein besonders stromsparender Betrieb möglich ist, eignet sich die Erfindung besonders (aber nicht ausschließlich) zur Verwendung mit netzunabhängig betreibbaren Elektrowerkzeuggeräten und dabei insbesondere zur Verwendung mit Elektrowerkzeuggeräten mit elektrischer Versorgung durch ein oder mehrere Akkupacks und/oder Batteriepacks. Grundsätzlich ist die vorliegende Erfindung aber auch für netzbetriebene (z. B. mit 230 Volt Wechselstrom) Elektrowerkzeugmaschinen einsetzbar.

In einer Weiterbildung der Erfindung kann die Eingabeschnittstelle als Benutzerschnittstelle, vorzugsweise als Betriebsschalter oder als Taster, ausgebildet sein.

Insbesondere kann es sich bei der Eingabeschnittstelle um den Betriebsschalter der Elektrowerkzeugmaschine handeln. Die Erfindung eignet sich besonders in Verbindung mit einem stromlosen Mikroschalter als Betriebsschalter der Elektrowerkzeugmaschine.

Die Eingabeschnittstelle kann allerdings auch als Datenschnittstelle, Maschinenschnittstelle, Hardwareschnittstelle oder sonstige Schnittstelle realisiert sein. Beispielsweise kann die Zielvorgabe für einen Betriebszustand des Elektromotors auch von einer weiteren Steuereinheit der Elektrowerkzeugmaschine oder sogar von einem unabhängigen Elektrogerät vorgegeben werden. Somit kann die Erfindung beispielsweise auch für Elektrowerkzeugmaschinen verwendet werden, die ferngesteuert oder zeitgesteuert betrieben werden. Auch in diesen Fällen muss insbesondere ein sicheres Auslaufen bzw. Abschalten des Elektromotors im Fehlerfall sichergestellt sein.

In einer Weiterbildung der Erfindung kann vorgesehen sein, dass die Motorsensoreinrichtung eine Leistungsmesseinheit, einen Drehzahlsensor und/oder einen Vibrationssensor umfasst.

Mit einer Leistungsmesseinheit ist insbesondere ein Leistungsmesser zur Erfassung der elektrischen Leistung des Elektromotors gemeint. Alternativ kann aber auch ein Spannungsmessgerät und/oder Strommessgerät vorgesehen sein. Grundsätzlich kann eine beliebige Motorsensoreinrichtung vorgesehen sein, die zum Erfassen des Betriebszustands des Elektromotors beitragen kann. Beispielsweise kann über einen Vibrationssensor auf einen aktiven oder inaktiven Betriebszustand des Elektromotors geschlossen werden.

Die Verwendung eines Drehzahlsensors als Motorsensoreinrichtung hat sich als besonders geeignet herausgestellt, um den tatsächlichen Betriebszustand des Elektromotors möglichst genau und einfach zu erfassen.

In einer Weiterbildung kann vorgesehen sein, dass der Drehzahlsensor als Hall-Sensor, Reed-Sensor, optischer Sensor und/oder kapazitiver Annäherungssensor ausgebildet ist.

Insbesondere Drehzahlsensoren in einer Ausgestaltung als Hall-Sensoren können zur Erfassung der Drehzahl von Elektromotoren in Elektrowerkzeugmaschinen sinnvoll und kostengünstig einsetzbar sein. Als Motorsensoreinrichtung zur Überwachung des Betriebszustands des Elektromotors durch die unabhängige Nebensteuereinheit kann somit ein bereits vorhandener Hall-Sensor verwendet werden.

Erfindungsgemäß ist vorgesehen, dass die Kontrolleinrichtung ein innerhalb der Motorsteuereinheit ausgeführtes Computerprogrammprodukt mit Programmcodemitteln der Sicherheitsklasse B ("Software Class-B-Input") umfasst. In einer Weiterbildung der Erfindung kann ergänzend vorgesehen sein, dass die Kontrolleinrichtung einen Leistungsschalter innerhalb eines Leistungspfades zum Elektromotor und/oder eine elektrische Sicherung der Elektrowerkzeugmaschine umfasst.

Beispielsweise kann vorgesehen sein, dass die Nebensteuereinheit bei einer erkannten definierten Abweichung des Betriebszustands von der Zielvorgabe ein Fehlersignal erzeugt, das zu der Kontrolleinrichtung übertragen wird und ein Abschalten des Elektromotors durch die Kontrolleinrichtung verursacht. Wenn ein entsprechend abgesicherter bzw. redundanter Abschaltpfad bereits in der Motorsteuereinheit vorhanden ist, beispielsweise in Form eines Software Class-B-Inputs, kann das Fehlersignal zum Abschalten des Elektromotors direkt von der Nebensteuereinheit an die Motorsteuereinheit übermittelt werden.

Alternativ oder zusätzlich kann das Fehlersignal der Nebensteuereinheit zur Ansteuerung eines Leistungsschalters, insbesondere eines elektronischen Halbleiterleistungsschalters, innerhalb des Leistungspfades zu dem Elektromotor vorgesehen sein.

Es ist auch möglich, ein Abschalten des Elektromotors zu erreichen, indem die Elektrowerkzeugmaschine selbst abgeschaltet wird. Dies kann beispielsweise durch Unterbrechen der Energieversorgung der Elektrowerkzeugmaschine erfolgen, beispielsweise indem die Nebensteuereinheit eine elektrische Sicherung der Elektrowerkzeugmaschine aktiviert.

Es kann auch vorgesehen sein, dass die Nebensteuereinheit, insbesondere durch Übermittlung eines Fehlersignals, eine Sicherungsfunktion einer verbundenen Energiequelle aktiviert. Beispielsweise weisen Akkupacks häufig interne Batterie-Management-Systeme (BMS) und Fehlerschnittstellen auf. Somit kann beispielsweise vorgesehen sein, dass die Nebensteuereinheit ein Fehlersignal über eine Fehlerschnittstelle der Elektrowerkzeugmaschine an ein Batterie-Management-System eines verbundenen Akkupacks übermittelt, woraufhin das Akkupack die Energieversorgung einstellt. In ähnlicher Weise könnte ein externer (Fehlerstrom-) Schutzschalter im Falle einer netzbetriebenen Elektrowerkzeugmaschine durch das absichtliche einprägen eines Fehlerstroms durch eine von der Nebensteuereinheit angesteuerte Fehlerschaltung ausgelöst werden, um die Stromversorgung der Elektrowerkzeugmaschine zu unterbrechen.

In einer Weiterbildung der Erfindung kann auch vorgesehen sein, dass die Motorsteuereinheit für den Betrieb des Elektromotors eine Pulsweitenmodulationseinheit zur Erzeugung eines Pulsweitenmodulationssignals für eine Leistungsregelung des Elektromotors umfasst.

Im Falle einer definierten Abweichung des Betriebszustands von der Zielvorgabe kann die Nebensteuereinheit dann beispielsweise durch Übermittlung eines Fehlersignals an die Pulsweitenmodulationseinheit dessen Pulsweitenmodulationssignale abschalten, woraufhin auch der Elektromotor abgeschaltet wird. Es kann auch vorgesehen sein, dass die Nebensteuereinheit die Pulsweitenmodulationssignale beeinflusst oder durch eigene Signale ersetzt, um den Elektromotor zu beeinflussen, um die Zielvorgabe zu erreichen.

In einer Weiterbildung kann außerdem vorgesehen sein, dass die Motorsteuereinheit für den Betrieb des Elektromotors mittels eines Leistungsverstärkers bzw. eines Motortreibers mit dem Elektromotor verbunden ist.

Insbesondere kann ein mehrstufiger Leistungsverstärker vorgesehen sein.

Im Falle einer definierten Abweichung des Betriebszustands von der Zielvorgabe kann die Nebensteuereinheit beispielsweise durch Übermittlung eines Fehlersignals den Leistungsverstärker oder eine beliebige Stufe des Leistungsverstärkers (z. B. eine Vorstufe oder eine Endstufe) deaktivieren, um ein Abschalten des Elektromotors zu erreichen.

Die Motorsteuereinheit kann innerhalb eines Hauptcontrollers der Elektrowerkzeugmaschine implementiert bzw. in dem Hauptcontroller enthalten oder als Hauptcontroller ausgebildet sein. Vorzugsweise ist die Nebensteuereinheit als zweiter Controller ausgeführt.

Die Erfindung betrifft auch ein Verfahren zum Betrieb einer Elektrowerkzeugmaschine mit einem Elektromotor, wonach eine Eingabeschnittstelle zur Eingabe einer Zielvorgabe eines Betriebszustands des Elektromotors in eine den Elektromotor betreibenden Motorsteuereinheit verwendet wird, wobei eine Motorsensoreinrichtung den Betriebszustand des Elektromotors erfasst.

Bei dem erfindungsgemäßen Verfahren ist vorgesehen, dass eine von der Motorsteuereinheit unabhängige Nebensteuereinheit mittels der Motorsensoreinrichtung den Betriebszustand des Elektromotors überwacht und mit der von der Eingabeschnittstelle eingegebenen Zielvorgabe vergleicht, wobei die Nebensteuereinheit den Elektromotor im Falle einer definierten Abweichung des Betriebszustands von der Zielvorgabe abschaltet oder zum Erreichen der Zielvorgabe beeinflusst.

Das Beeinflussen und/oder das Abschalten des Elektromotors durch die unabhängige Nebensteuereinheit erfolgt unmittelbar oder mittelbar unter Verwendung einer Kontrolleinrichtung. Hierzu führt die Kontrolleinrichtung ein Computerprogrammprodukt mit Programmcodemitteln der Sicherheitsklasse B innerhalb der Motorsteuereinheit aus.

Grundsätzlich sei darauf hingewiesen, dass Merkmale, die bereits im Zusammenhang mit der erfindungsgemäßen Elektrowerkzeugmaschine beschrieben wurden, selbstverständlich auch für das erfindungsgemäße Verfahren bzw. das nachfolgend noch beschriebene Computerprogrammprodukt vorteilhaft umsetzbar sind - und umgekehrt. Ferner können Vorteile, die bereits im Zusammenhang mit der erfindungsgemäßen Elektrowerkzeugmaschine genannt wurden, auch auf das erfindungsgemäße Verfahren bzw. auf das Computerprogrammprodukt bezogen verstanden werden - und umgekehrt.

In einer Weiterbildung kann vorgesehen sein, dass als Zielvorgabe diskrete Betriebszustände des Elektromotors, insbesondere ein ein/ausgeschalteter Betriebszustand des Elektromotors und/oder kontinuierliche Betriebszustände, insbesondere eine Drehzahl oder eine elektrische Leistungsaufnahme des Elektromotors, verwendet werden.

Die Erfindung eignet sich besonders zur Verwendung mit Zielvorgaben betreffend die beiden Betriebszustände "eingeschaltet" / "ausgeschaltet". Wenn ein Benutzer der Elektrowerkzeugmaschine beispielsweise den Betriebsschalter der Elektrowerkzeugmaschine loslässt, soll der Elektromotor in der Regel zeitnah abgeschaltet werden. Wird durch die Motorsensoreinrichtung nachfolgend erkannt, dass diese Zielvorgabe nicht erfüllt wird, kann die Nebensteuereinheit als redundantes Sicherheitssystem verwendet werden, um den Elektromotor auszuschalten.

In einer Weiterbildung kann vorgesehen sein, dass bei einer einen ausgeschalteten Betriebszustand des Elektromotors betreffenden Zielvorgabe eine definierte Abweichung des Betriebszustands von der Zielvorgabe vorliegt, wenn der Elektromotor nicht innerhalb einer definierten Zeit nach Eingabe der Zielvorgabe abgeschaltet ist und/oder wenn kein definierter Abfall der Drehzahl und/oder kein definierter Abfall der Leistungsaufnahme des Elektromotors innerhalb der definierten Zeit stattfindet.

Bei einer Abweichung zwischen Zielvorgabe und Betriebszustand des Elektromotors, die innerhalb zu erwartender Mess-, Betriebs- oder sonstiger Toleranzen liegt, handelt es sich nicht um die erfindungsgemäße definierte Abweichung.

Ferner ist vorgesehen, dass vor dem Vergleich einer unmittelbar eingegebenen Zielvorgabe mit dem aktuellen Betriebszustand des Elektromotors eine definierte Zeitspanne abgewartet wird, um sicherzustellen, dass die Zielvorgabe im regulären Betrieb der Elektrowerkzeugmaschine von den jeweiligen Komponenten (z. B. der Motorsteuereinheit) bereits ausreichend verarbeitet und umgesetzt werden konnte; zumindest insofern, dass sich am Elektromotor im Normalbetrieb bereits eine Reaktion auf die eingegebene Zielvorgabe ablesen lässt (z. B. ein Abfallen der Drehzahl bei einem Abschaltwunsch).

Insbesondere bei Überwachung hinsichtlich eines ausgeschalteten Betriebszustands kann ein sicherer Abschaltpfad und somit eine besonders sichere Elektrowerkzeugmaschine bereitgestellt werden. Wenn beispielsweise ein Benutzer den Betriebsschalter der Elektrowerkzeugmaschine loslässt und die Drehzahl des Motors (oder die Leistungsaufnahme des Elektromotors) weiterhin konstant bleibt, nur unerwartet langsam abfällt oder sogar steigt, kann die Nebensteuereinheit dies als Fehlerfall aufgrund einer definierten Abweichung des Betriebszustands von der Zielvorgabe erkennen. Bei einem geöffneten Betriebsschalter ist zu erwarten, dass die Drehzahl des Elektromotors über die Zeit definiert absinkt. Geschieht dies nicht, so kann die Nebensteuereinheit die Ansteuerung des Elektromotors ggf. blockieren, woraufhin der Elektromotor sicher auslaufen kann.

In einer Weiterbildung der Erfindung kann vorgesehen sein, dass bei einem Abschalten des Elektromotors aufgrund einer definierten Abweichung des Betriebszustands von der Zielvorgabe ein Wiederanlauf des Elektromotors (oder der gesamten Elektrowerkzeugmaschine) verhindert wird.

Beispielsweise kann ein bereits vorhandener Wiederanlaufschutz durch die Nebensteuereinheit aktiviert werden und/oder die Elektrowerkzeugmaschine bis zu einer Freischaltung durch den Hersteller bzw. den Kundendienst blockiert werden. Hierdurch kann gewährleistet werden, dass ein Benutzer eine als fehlerhaft erkannte Elektrowerkzeugmaschine nicht in fahrlässiger Weise weiterverwendet.

Die Erfindung betrifft auch ein Computerprogrammprodukt mit Programmcodemitteln, um ein vorstehend genanntes Verfahren durchzuführen, wenn das Programm auf einer Steuereinheit einer Elektrowerkzeugmaschine ausgeführt wird.

Die Steuereinheit, insbesondere die Motorsteuereinheit und/oder Nebensteuereinheit kann bzw. können als Mikroprozessoren ausgebildet sein. Anstelle eines Mikroprozessors kann auch eine beliebige weitere Einrichtung zur Implementierung der Steuereinheit bzw. Motorsteuereinheit und/oder Nebensteuereinheit vorgesehen sein, beispielsweise eine oder mehrere Anordnungen diskreter elektrischer Bauteile auf einer Leiterplatte, eine Speicherprogrammierbare Steuerung (SPS), eine Anwendungsspezifische Integrierte Schaltung (ASIC) oder eine sonstige programmierbare Schaltung, beispielsweise auch ein Field-Programmable-Gate-Array (FPGA), eine Programmierbare Logische Anordnung (PLA) und/oder ein handelsüblicher Computer.

Ergänzend sei darauf hingewiesen, dass die Begriffe, wie "umfassend", "aufweisend" oder "mit", keine anderen Merkmale oder Schritte ausschließen. Ferner schließen Begriffe, wie "ein" oder "das", die auf eine Einzahl von Schritten oder Merkmalen hinweisen, eine Mehrzahl von Merkmalen oder Schritten aus.

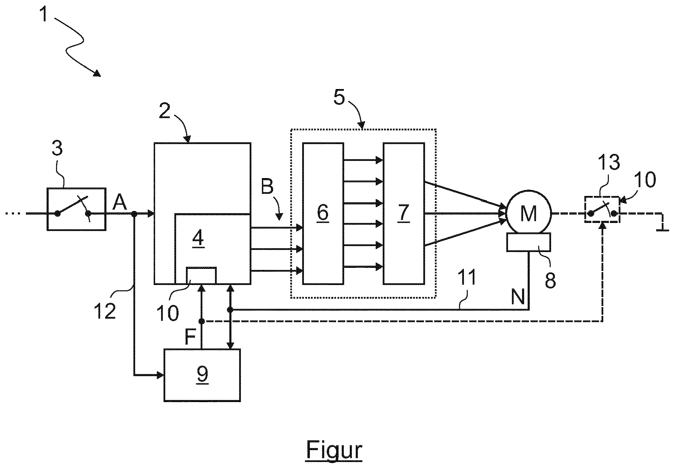

Nachfolgend wird ein Ausführungsbeispiel der Erfindung anhand der Zeichnung näher beschrieben.

Die Figur zeigt ein bevorzugtes Ausführungsbeispiel, in dem einzelne Merkmale der vorliegenden Erfindung in Kombination miteinander dargestellt sind. Die Merkmale sind aber auch losgelöst voneinander umsetzbar und können dementsprechend von einem Fachmann ohne Weiteres zu weiteren sinnvollen Kombinationen und Unterkombinationen verbunden werden.

Die in der Figur dargestellte Elektrowerkzeugmaschine 1 umfasst einen Elektromotor M und eine Motorsteuereinheit 2 zum Betrieb des Elektromotors M.

Ferner ist eine Eingabeschnittstelle vorgesehen, die im Ausführungsbeispiel als Benutzerschnittstelle ausgebildet und als Betriebsschalter 3 (oder Taster) realisiert ist. Grundsätzlich kann allerdings eine beliebige Eingabeschnittstelle vorgesehen sein, beispielsweise auch eine reine Datenschnittstelle. Durch den Betriebsschalter 3 kann eine Zielvorgabe A eines Betriebszustands des Elektromotors M in die Motorsteuereinheit 2 eingegeben werden. Im Ausführungsbeispiel handelt es sich bei der Zielvorgabe A um die diskreten Betriebszustände "eingeschaltet" und "ausgeschaltet" des Elektromotors M. Mittels des Betriebsschalters 3 kann somit der Elektromotor M der Elektrowerkzeugmaschine 1 wahlweise ein- oder ausgeschaltet werden. Grundsätzlich kann als Zielvorgabe A ein beliebiger diskreter Betriebszustand und/oder ein beliebiger kontinuierlicher Betriebszustand, insbesondere auch eine Drehzahl N oder eine elektrische Leistungsaufnahme des Elektromotors M, verwendet werden.

Für den Betrieb des Elektromotors M umfasst die Motorsteuereinheit 2 im Ausführungsbeispiel eine Pulsweitenmodulationseinheit 4 zur Erzeugung eines Pulsweitenmodulationssignals B für eine Leistungsregelung des Elektromotors M. Die Pulsweitenmodulationseinheit 4 kann allerdings auch entfallen oder durch eine andere Einheit zur Leistungsregelung ersetzt werden. Hierauf kommt es im Sinne der Erfindung nicht an.

Schließlich betreibt die Motorsteuereinheit 2 den Elektromotor M im Ausführungsbeispiel mittels eines Leistungsverstärkers 5, wobei das Pulsweitenmodulationssignal B für die Ansteuerung des Elektromotors M entsprechend verstärkt wird. Im Ausführungsbeispiel ist ein zweistufiger Leistungsverstärker 5 dargestellt, bestehend aus einer Treiber- bzw. Vorstufe 6 und einer Endstufe 7. Grundsätzlich kann der Leistungsverstärker 5 einen beliebigen Aufbau aufweisen, beispielsweise auch einstufig aufgebaut sein oder sogar entfallen, auch hierauf kommt es im Sinne der Erfindung nicht an.

Die Elektrowerkzeugmaschine 1 umfasst ferner eine Motorsensoreinrichtung 8 zur Erfassung des Betriebszustands des Elektromotors M. Das Ausgangssignal der Motorsensoreinrichtung 8 (vorliegend beispielhaft die Drehzahl N des Elektromotors M) ist zu der Motorsteuereinheit 2 zurückgeführt, um eine geeignete Leistungsregelung zu gewährleisten. Die Rückführung kann allerdings auch entfallen.

Die Motorsensoreinrichtung 8 kann eine Leistungsmesseinheit zur Erfassung der elektrischen Leistungsaufnahme des Elektromotors M, einen Strommesser, einen Spannungsmesser, einen Drehzahlsensor und/oder einen Vibrationssensor umfassen. Als besonders geeignet hat sich die Verwendung eines Drehzahlsensors als Motorsensoreinrichtung 8 herausgestellt, wobei der Drehzahlsensor als Hall-Sensor, Reed-Sensor, optischer Sensor und/oder kapazitiver Annäherungssensor ausgebildet sein kann.

Zur Einhaltung gesetzlicher Normen und zur Bereitstellung einer besonders sicheren Elektrowerkzeugmaschine 1 wird erfindungsgemäß ein zweiter Kanal bereitgestellt, der eine von der Motorsteuereinheit 2 unabhängige Nebensteuereinheit 9 umfasst. Die Nebensteuereinheit 9 ist mit der Motorsensoreinrichtung 8 zur Überwachung des Betriebszustands des Elektromotors M einerseits und mit der Eingabeschnittstelle bzw. dem Betriebsschalter 3 andererseits kommunikationsverbunden und dazu eingerichtet, den Betriebszustand des Elektromotors M mit der über die Eingabeschnittstelle bzw. den Betriebsschalter 3 eingegebenen Zielvorgabe A zu vergleichen und bei einer definierten Abweichung des Betriebszustands von der Zielvorgabe A mittels einer Kontrolleinrichtung 10 den Elektromotor M zu beeinflussen, insbesondere abzuschalten oder auf sonstige Weise zu beeinflussen, beispielsweise derart, dass die Zielvorgabe A erreicht wird.

Im Ausführungsbeispiel wird die zur Regelung des Elektromotors M ohnehin bereits vorhandene Motorsensoreinrichtung 8 von der Nebensteuereinheit 9 mitverwendet. Ein entsprechendes Sensorsignal, das im Ausführungsbeispiel die Drehzahl N des Elektromotors M beinhaltet, kann beispielsweise über eine entsprechende Sensorsignalleitung 11 mit der Motorsteuereinheit 2 einerseits und der Nebensteuereinheit 9 andererseits verbunden sein.

Ferner ist die Eingabeschnittstelle bzw. der Betriebsschalter 3 über eine Schaltersignalleitung 12 mit der Motorsteuereinheit 2 und mit der Nebensteuereinheit 9 verbunden. Dadurch ist es möglich, dass die von der Motorsteuereinheit 2 unabhängige Nebensteuereinheit 9 mittels der Motorsensoreinrichtung 8 den Betriebszustand des Elektromotors M überwacht und mit der von der Eingabeschnittstelle bzw. dem Betriebsschalter 3 eingegebenen Zielvorgabe A vergleicht, wobei die Nebensteuereinheit 9 den Elektromotor M im Falle einer definierten Abweichung des Betriebszustands von der Zielvorgabe A abschaltet.

Insbesondere kann bei einer einen ausgeschalteten Betriebszustand des Elektromotors M betreffenden Zielvorgabe A eine definierte Abweichung des Betriebszustands von der Zielvorgabe A vorliegen, wenn der Elektromotor M nicht innerhalb einer definierten Zeit nach der Eingabe der Zielvorgabe A abgeschaltet ist. Es kann auch eine definierte Abweichung des Betriebszustands von der Zielvorgabe A vorliegen, wenn kein definierter Abfall der Drehzahl N und/oder kein definierte Abfall der Leistungsaufnahme des Elektromotors M innerhalb der definierten Zeit stattfindet.

Als Kontrolleinrichtung 10 ist im Ausführungsbeispiel ein innerhalb der Motorsteuereinheit 2 ausgeführtes Computerprogrammprodukt mit Programmcodemitteln der Sicherheitsklasse B vorgesehen. Bei einer erkannten Abweichung kann die Nebensteuereinheit 9 somit ein Fehlersignal F an die Motorsteuereinheit 2 übermitteln, woraufhin beispielsweise die Pulsweitenmodulationseinheit 4 deaktiviert wird.

Es kann alternativ oder zusätzlich aber auch ein Leistungsschalter 13 innerhalb eines Leistungspfades zu dem Elektromotor M vorgesehen sein, beispielsweise um eine Massezuleitung oder eine sonstige elektrische Zuleitung zu dem Elektromotor M zu unterbrechen, indem das Fehlersignal F den Leistungsschalter 13 ausgangsseitig ausschaltet. Das Prinzip ist in der Figur gestrichelt dargestellt. Schließlich kann auch eine elektrische Sicherung (nicht dargestellt) zum Abschalten des Elektromotors M oder der gesamten Elektrowerkzeugmaschine 1 verwendet werden. Auch eine Übertragung des Fehlersignals F an die die Elektrowerkzeugmaschine 1 versorgende Energiequelle (Akkupack, Batteriepack und/oder Netzversorgung) ist möglich.

Es kann vorgesehen sein, dass bei einem Abschalten des Elektromotors M bei einer erkannten definierten Abweichung des Betriebszustands von der Zielvorgabe A ein Wiederanlauf des Elektromotors M bzw. der Elektrowerkzeugmaschine 1 verhindert wird.

Die Motorsteuereinheit 2 und/oder Nebensteuereinheit 9 kann bzw. können als Mikroprozessoren ausgebildet sein und/oder eine oder mehrere Anordnungen diskreter elektrischer Bauteile auf einer Leiterplatte umfassen. Grundsätzlich sind beliebige Ausführungen der Steuereinheiten 2, 9 möglich.

## Patentansprüche

1. Elektrowerkzeugmaschine (1), umfassend einen Elektromotor (M), eine Motorsteuereinheit (2) zum Betrieb des Elektromotors (M), eine Eingabeschnittstelle (3) zur Eingabe einer Zielvorgabe (A) eines Betriebszustands des Elektromotors (M) in die Motorsteuereinheit (2) und eine Motorsensoreinrichtung (8) zur Erfassung des Betriebszustands des Elektromotors (M), wobei eine von der Motorsteuereinheit (2) unabhängige Nebensteuereinheit (9) vorgesehen ist, die mit der Motorsensoreinrichtung (8) und mit der Eingabeschnittstelle (3) kommunikationsverbunden und dazu eingerichtet ist, den von der Motorsensoreinrichtung (8) erfassten Betriebszustand des Elektromotors (M) mit der über die Eingabeschnittstelle (3) eingegebenen Zielvorgabe (A) zu vergleichen und bei einer definierten Abweichung des Betriebszustands von der Zielvorgabe (A) mittels einer Kontrolleinrichtung (10) den Elektromotor (M) abzuschalten,
**dadurch gekennzeichnet, dass**
die Kontrolleinrichtung (10) ein innerhalb der Motorsteuereinheit (2) ausgeführtes Computerprogrammprodukt mit Programmcodemitteln der Sicherheitsklasse B umfasst, um einen redundanten Abschaltpfad bereitzustellen, und wobei die Nebensteuereinheit (9) eingerichtet ist, ein Fehlersignal zum Abschalten des Elektromotors (M) direkt an die Kontrolleinrichtung (10) der Motorsteuereinheit (2) zu übermitteln.

2. Elektrowerkzeugmaschine (1) nach Anspruch 1,
**dadurch gekennzeichnet, dass**
die Eingabeschnittstelle als Benutzerschnittstelle, vorzugsweise als Betriebsschalter (3) oder als Taster, ausgebildet ist.

3. Elektrowerkzeugmaschine (1) nach Anspruch 1 oder 2,
**dadurch gekennzeichnet, dass**
die Motorsensoreinrichtung (8) eine Leistungsmesseinheit, einen Drehzahlsensor und/oder einen Vibrationssensor umfasst.

4. Elektrowerkzeugmaschine (1) nach Anspruch 3,
**dadurch gekennzeichnet, dass**
der Drehzahlsensor als Hall-Sensor, Reed-Sensor, optischer Sensor und/oder kapazitiver Annäherungssensor ausgebildet ist.

5. Elektrowerkzeugmaschine (1) nach einem der Ansprüche 1 bis 4,
**dadurch gekennzeichnet, dass**
die Kontrolleinrichtung (10) einen Leistungsschalter (13) innerhalb eines Leistungspfades zu dem Elektromotor (M) und/oder eine elektrische Sicherung umfasst.

6. Elektrowerkzeugmaschine (1) nach einem der Ansprüche 1 bis 5,
**dadurch gekennzeichnet, dass**
die Motorsteuereinheit (2) für den Betrieb des Elektromotors (M) eine Pulsweitenmodulationseinheit (4) zur Erzeugung eines Pulsweitenmodulationssignals (B) für eine Leistungsregelung des Elektromotors (M) umfasst.

7. Elektrowerkzeugmaschine (1) nach einem der Ansprüche 1 bis 6,
**dadurch gekennzeichnet, dass**
die Motorsteuereinheit (2) für den Betrieb des Elektromotors (M) mittels eines Leistungsverstärkers (5) mit dem Elektromotor (M) verbunden ist.

8. Verfahren zum Betrieb einer Elektrowerkzeugmaschine (1) mit einem Elektromotor (M), wonach eine Eingabeschnittstelle (3) zur Eingabe einer Zielvorgabe (A) eines Betriebszustands des Elektromotors (M) in eine den Elektromotor (M) betreibende Motorsteuereinheit (2) verwendet wird, wobei eine Motorsensoreinrichtung (8) den Betriebszustand des Elektromotors (M) erfasst, und wobei eine von der Motorsteuereinheit (2) unabhängige Nebensteuereinheit (9) mittels der Motorsensoreinrichtung (8) den Betriebszustand des Elektromotors (M) überwacht und mit der von der Eingabeschnittstelle (3) eingegebenen Zielvorgabe (A) vergleicht, wobei die Nebensteuereinheit (9) den Elektromotor (M) im Falle einer definierten Abweichung des Betriebszustands von der Zielvorgabe (A) mittels einer Kontrolleinrichtung (10) abschaltet oder zum Erreichen der Zielvorgabe (A) beeinflusst,
**dadurch gekennzeichnet, dass**
die Kontrolleinrichtung (10) ein Computerprogrammprodukt mit Programmcodemitteln der Sicherheitsklasse B innerhalb der Motorsteuereinheit (2) ausführt, um einen redundanten Abschaltpfad bereitzustellen, und wobei die Nebensteuereinheit (9) zum Abschalten des Elektromotors (M) ein Fehlersignal direkt an die Kontrolleinrichtung (10) der Motorsteuereinheit (2) übermittelt.

9. Verfahren nach Anspruch 8,
**dadurch gekennzeichnet, dass**
als Zielvorgabe (A) diskrete Betriebszustände des Elektromotors (M), insbesondere ein ein/ausgeschalteter Betriebszustand des Elektromotors (M) und/oder kontinuierliche Betriebszustände, insbesondere eine Drehzahl (N) oder eine elektrische Leistungsaufnahme des Elektromotors (M), verwendet werden.

10. Verfahren nach Anspruch 9,
**dadurch gekennzeichnet, dass**
bei einer einen ausgeschalteten Betriebszustand des Elektromotors (M) betreffenden Zielvorgabe (A) eine definierte Abweichung des Betriebszustands von der Zielvorgabe (A) vorliegt, wenn der Elektromotor (M) nicht innerhalb einer definierten Zeit nach Eingabe der Zielvorgabe (A) abgeschaltet ist und/oder wenn kein definierter Abfall der Drehzahl (N) und/oder kein definierter Abfall der Leistungsaufnahme des Elektromotors (M) innerhalb der definierten Zeit stattfindet.

11. Verfahren nach einem der Ansprüche 8 bis 10,
**dadurch gekennzeichnet, dass**
nach einem Abschalten des Elektromotors (M) aufgrund einer definierten Abweichung des Betriebszustands von der Zielvorgabe (A) ein Wiederanlauf des Elektromotors (M) verhindert wird.

12. Computerprogrammprodukt mit Programmcodemitteln, um ein Verfahren gemäß einem der Ansprüche 8 bis 11 durchzuführen, wenn das Programm auf einer Steuereinheit (2, 9) einer Elektrowerkzeugmaschine (1) ausgeführt wird.

## Claims

1. Power tool (1), comprising an electric motor (M), a motor control unit (2) for operating the electric motor (M), an input interface (3) for inputting a target value (A) of an operating state of the electric motor (M) into the motor control unit (2) and a motor sensor device (8) for detecting the operating state of the electric motor (M), wherein a secondary control unit (9) independent of the motor control unit (2) is provided, which is connected for communication with the motor sensor device (8) and with the input interface (3) and is set up to compare the operating state of the electric motor (M) detected by the motor sensor device (8) with the target specification (A) input via the input interface (3) and to switch off the electric motor (M) in the event of a defined deviation of the operating state from the target specification (A) by means of a control device (10),
**characterised in that**
the control device (10) comprises a computer program product executed within the motor control unit (2) with program code means of safety class B in order to provide a redundant switch-off path, and wherein the auxiliary control unit (9) is arranged to transmit an error signal for switching off the electric motor (M) directly to the control device (10) of the motor control unit (2).

2. The power tool (1) according to claim 1,
**characterised in that**
the input interface is designed as a user interface, preferably as an operating switch (3) or as a button.

3. The power tool (1) according to claim 1 or 2,
**characterised in that**
the motor sensor device (8) comprises a power measuring unit, a speed sensor and/or a vibration sensor.

4. The power tool (1) according to claim 3,
**characterised in that**
the speed sensor is designed as a Hall sensor, reed sensor, optical sensor and/or capacitive proximity sensor.

5. The power tool (1) according to one of the claims 1 to 4,
**characterised in that**
the control device (10) comprises a power switch (13) within a power path to the electric motor (M) and/or an electrical fuse.

6. The power tool (1) according to any one of claims 1 to 5,
**characterised in that**
the motor control unit (2) for the operation of the electric motor (M) comprises a pulse width modulation unit (4) for generating a pulse width modulation signal (B) for a power control of the electric motor (M).

7. The power tool (1) according to any one of claims 1 to 6,
**characterised in that**
the motor control unit (2) for operating the electric motor (M) is connected to the electric motor (M) by means of a power amplifier (5).

8. Method for operating an electric machine tool (1) with an electric motor (M), according to which an input interface (3) is used for inputting a target specification (A) of an operating state of the electric motor (M) into a motor control unit (2) operating the electric motor (M), wherein a motor sensor device (8) detects the operating state of the electric motor (M), and wherein a secondary control unit (9) independent of the motor control unit (2) monitors the operating state of the electric motor (M) by means of the motor sensor device (8) and compares it with the target specification (A) entered by the input interface (3), wherein the secondary control unit (9) switches off the electric motor (M) in the event of a defined deviation of the operating state from the target specification (A) by means of a control device (10) or influences it to achieve the target specification (A),
**characterised in that**
the control device (10) executes a computer program product with program code means of safety class B within the motor control unit (2) to provide a redundant shutdown path, and wherein the slave control unit (9) transmits an error signal directly to the control device (10) of the motor control unit (2) to shut down the electric motor (M).

9. The method according to claim 8,
**characterised in that**
discrete operating states of the electric motor (M), in particular an on/off operating state of the electric motor (M) and/or continuous operating states, in particular a speed (N) or an electrical power consumption of the electric motor (M), are used as the target (A).

10. The method according to claim 9,
**characterised in that**
in the case of a target specification (A) relating to a switched-off operating state of the electric motor (M), a defined deviation of the operating state from the target specification (A) is present if the electric motor (M) is not switched off within a defined time after input of the target specification (A) and/or if no defined drop in the speed (N) and/or no defined drop in the power consumption of the electric motor (M) takes place within the defined time.

11. The method according to one of claims 8 to 10,
**characterised in that**
a restart of the electric motor (M) is prevented after a switch-off of the electric motor (M) due to a defined deviation of the operating state from the target value (A).

12. A computer program product comprising program code means for carrying out a method according to any one of claims 8 to 11 when the program is executed on a control unit (2, 9) of a power tool (1).

## Revendications

1. Machine-outil électrique (1), comprenant un moteur électrique (M), une unité de commande de moteur (2) pour le fonctionnement du moteur électrique (M), une interface d'entrée (3) pour l'entrée d'une consigne cible (A) d'un état de fonctionnement du moteur électrique (M) dans l'unité de commande de moteur (2) et un dispositif de capteur de moteur (8) pour la détection de l'état de fonctionnement du moteur électrique (M), une unité de commande secondaire (9) indépendante de l'unité de commande de moteur (2) étant prévue, qui est reliée par communication au dispositif de détection de moteur (8) et à l'interface d'entrée (3) et qui est conçue pour comparer l'état de fonctionnement du moteur électrique (M) détecté par le dispositif de détection de moteur (8) avec la consigne cible (A) entrée par l'intermédiaire de l'interface d'entrée (3) et pour arrêter le moteur électrique (M) au moyen d'un dispositif de contrôle (10) en cas d'écart défini entre l'état de fonctionnement et la consigne cible (A),
**caractérisé en ce que**
le dispositif de contrôle (10) comprend un produit de programme informatique exécuté à l'intérieur de l'unité de commande de moteur (2) avec des moyens de code de programme de la classe de sécurité B pour fournir un chemin d'arrêt redondant, et dans lequel l'unité de commande auxiliaire (9) est agencée pour transmettre un signal d'erreur pour arrêter le moteur électrique (M) directement au dispositif de contrôle (10) de l'unité de commande de moteur (2).

2. Machine-outil électrique (1) selon la revendication 1,
**caractérisé en ce que**
l'interface d'entrée est conçue comme une interface utilisateur, de préférence comme un interrupteur de fonctionnement (3) ou un bouton-poussoir.

3. Machine-outil électrique (1) selon la revendication 1 ou 2,
**caractérisé en ce que**
le dispositif de détection de moteur (8) comprend une unité de mesure de puissance, un capteur de vitesse de rotation et/ou un capteur de vibrations.

4. Machine-outil électrique (1) selon la revendication 3,
**caractérisé en ce que**
le capteur de vitesse de rotation est conçu comme un capteur à effet Hall, un capteur Reed, un capteur optique et/ou un capteur de proximité capacitif.

5. Machine-outil électrique (1) selon l'une des revendications 1 à 4,
**caractérisé en ce que**
le dispositif de contrôle (10) comprend un interrupteur de puissance (13) à l'intérieur d'un chemin de puissance vers le moteur électrique (M) et/ou un fusible électrique.

6. Machine-outil électrique (1) selon l'une des revendications 1 à 5,
**caractérisé en ce que**
l'unité de commande de moteur (2) pour le fonctionnement du moteur électrique (M) comprend une unité de modulation de largeur d'impulsion (4) pour générer un signal de modulation de largeur d'impulsion (B) pour une régulation de puissance du moteur électrique (M).

7. Machine-outil électrique (1) selon l'une des revendications 1 à 6,
**caractérisé en ce que**
l'unité de commande de moteur (2) pour le fonctionnement du moteur électrique (M) est reliée au moteur électrique (M) au moyen d'un amplificateur de puissance (5).

8. Procédé pour faire fonctionner une machine-outil électrique (1) avec un moteur électrique (M), selon lequel une interface d'entrée (3) est utilisée pour entrer une consigne cible (A) d'un état de fonctionnement du moteur électrique (M) dans une unité de commande de moteur (2) faisant fonctionner le moteur électrique (M), un dispositif de capteur de moteur (8) détectant l'état de fonctionnement du moteur électrique (M), et dans lequel une unité de commande auxiliaire (9) indépendante de l'unité de commande de moteur (2) surveille l'état de fonctionnement du moteur électrique (M) au moyen du dispositif de capteur de moteur (8) et le compare à la consigne cible (A) entrée par l'interface d'entrée (3), l'unité de commande auxiliaire (9) arrêtant le moteur électrique (M) au moyen d'un dispositif de contre-rotation (10) dans le cas d'un écart défini de l'état de fonctionnement par rapport à la consigne cible (A) ou l'influençant pour atteindre la consigne cible (A),
**caractérisé en ce que**
le dispositif de contrôle (10) exécute un produit de programme informatique avec des moyens de code de programme de classe de sécurité B à l'intérieur de l'unité de commande de moteur (2) pour fournir un chemin d'arrêt redondant, et dans lequel l'unité de commande auxiliaire (9) transmet un signal d'erreur directement au dispositif de contrôle (10) de l'unité de commande de moteur (2) pour arrêter le moteur électrique (M).

9. Procédé selon la revendication 8,
**caractérisé en ce que**
on utilise comme consigne (A) des états de fonctionnement discrets du moteur électrique (M), notamment un état de fonctionnement activé/désactivé du moteur électrique (M) et/ou des états d'entraînement continus, notamment une vitesse de rotation (N) ou une puissance électrique absorbée du moteur électrique (M).

10. Procédé selon la revendication 9,
**caractérisé en ce que**
pour une consigne cible (A) concernant un état de fonctionnement désactivé du moteur électrique (M), il existe un écart défini de l'état de fonctionnement par rapport à la consigne cible (A) si le moteur électrique (M) n'est pas désactivé dans un temps défini après l'entrée de la consigne cible (A) et/ou si aucune chute définie de la vitesse de rotation (N) et/ou aucune chute définie de la puissance absorbée du moteur électrique (M) n'a lieu dans le temps défini.

11. Procédé selon l'une des revendications 8 à 10,
**caractérisé en ce que**
après un arrêt du moteur électrique (M) en raison d'un écart défini de l'état de fonctionnement par rapport à la consigne cible (A), un redémarrage du moteur électrique (M) est empêché.

12. Produit programme d'ordinateur comprenant des moyens de code de programme pour mettre en oeuvre un procédé selon l'une quelconque des revendications 8 à 11, lorsque le programme est exécuté sur une unité de commande (2, 9) d'une machine-outil électrique (1).
